# EUROPÄISCHE PATENTSCHRIFT

(11) **EP 2 675 835 B1**
(45) Veröffentlichungstag und Bekanntmachung des Hinweises auf die Patenterteilung: **29.10.2014**
(21) Anmeldenummer: 12705276.9
(22) Anmeldetag: 16.02.2012
(51) Int. Cl.: C08G 63/00, C08G 65/00

(54) **VERFAHREN ZUR HERSTELLUNG VON POLYESTERETHEROLEN**
VERFAHREN ZUR HERSTELLUNG VON POLYESTERETHEROLEN
PROCÉDÉ DE PRODUCTION DE POLYESTERÉTHEROLS

(30) Priorität: 17.02.2011 EP 11154859
(43) Veröffentlichungstag der Anmeldung: 25.12.2013
(73) Patentinhaber: BASF SE, 67056 Ludwigshafen (DE)
(72) Erfinder: KUNST, Andreas, 67063 Ludwigshafen (DE); ZARBAKHSH, Sirus, Hong Kong (CN); KAMPF, Gunnar, 32351 Stemwede-Haldem (DE); BALBO BLOCK, Marco, 49074 Osnabrück (DE)
(86) Internationale Anmeldenummer: PCT/EP2012/052658
(87) Internationale Veröffentlichungsnummer: WO 2012/110585

(56) Entgegenhaltungen:
- EP-A1- 0 437 787
- EP-A1- 1 674 493
- EP-A2- 0 250 967
- WO-A1-2010/066635

## Beschreibung

Die vorliegende Erfindung betrifft ein neues Verfahren zur Herstellung von Polyesteretherolen durch Alkoxylierung von Polyesterolen.

Die Herstellung von Polyetherester-Polyolen ist bekannt. In DE 36 13 875 wird beispielsweise ein Verfahren zur Herstellung von Polyesterether-Polyolen beschrieben, wobei zur Herstellung der Polyesterpolyole bevorzugt aliphatische Carbonsäuren und zur Alkoxylierung des Zwischenprodukts bevorzugt Ethylenoxid verwendet werden.

Die Alkoxylierung wird hier bei relativ hohen Temperaturen von ca. 160 °C durchgeführt, was zu Nebenreaktionen führen kann.

Die Verwendung von Estern zur Verbesserung der Flammwidrigkeit von PIR (Polyisocyanurat)- und PUR (Polyurethan)-Hartschäumen ist ebenfalls bekannt und beschrieben. Solche Systeme zeichnen sich im Vergleich zu klassischen PUR-Hartschäumen auf PO-Etherbasis durch eine erhöhte Reaktivität und eine schlechte Haftung aus, die im Falle von esterbasierten PUR-Hartschäumen noch grenzwertig sein kann. Zur Haftungsverbesserung verwendete man deswegen bei solchen Systemen häufig einen Haftvermittler, wie es in EP 1516720 A1 beschrieben ist. Gerade bei PIR-Systemen ist ferner die Verwendung einer hohen Doppelbandtemperatur bei der Verarbeitung von Nöten, um eine ausreichende Haftung und Härtung zu erzielen.

Auch ist die Verwendung von Polyestern in höherdichten, glasfaserverstärkten Polyurethanhartschäumen bekannt und beispielsweise in WO2010066635 beschrieben. Dabei wird das flüssige Polyurethanreaktionsgemisch auf mehrere Lagen Glasfasermatten gegeben. Das Reaktionsgemisch muss erst komplett in die Glasfaserlagen eindringen, bevor es anfängt zu schäumen. Diese Durchlaufzeit ist kritisch für eine homogene Verteilung der Glasfasern im Schaum sowie für die maximal zu erreichende Schaumproduktionsgeschwindigkeit.

Es war somit eine Aufgabe der vorliegenden Erfindung, Polyesteretherole für flammgeschützte, esterbasierte, bevorzugt Br-freie PIR- und PUR-Hartschäume bereitzustellen, die eine geringere Sprödigkeit aufweisen und bei gewöhnlichen Doppelbandtemperaturen haftvermittlerfrei verarbeitbar sind und dennoch eine ausreichende Haftung erzielen. Des Weiteren sollen die Hartschäume eine bessere Aushärtung und somit eine höhere Maßhaltigkeit beim Verlassen der Doppelbandanlage aufweisen.

Eine weitere Aufgabe war es zudem, Polyesteretherole für glasfaserverstärkte PUR-Hartschäume bereitzustellen, die zu einem flüssigen Polyurethanreaktionsgemisch führen, welches deutlich schneller in Glasfaserlagen eindringt und somit eine schnellere Produktion der verstärkten Hartschäume bei gleichbleibender Schaumqualität, insbesondere bezogen auf die homogene Verteilung der Glasfasern im Schaum, ermöglicht.

Die Aufgabe konnte nun gelöst werden, indem Polyesterole aus bestimmten aromatischen Dicarbonsäuren (oder deren Derivaten) mit Propylenoxid (PO) oder einem Gemisch aus Propylenoxid und Ethylenoxid (EO) unter Basenkatalyse alkoxyliert wurden.

Überraschender Weise konnte nachgewiesen werden, dass die Verwendung von propoxylierten Estern nicht nur dazu führt, dass die Reaktivität der Systeme verringert wird, sondern auch die Aushärtung und die Haftung zu den Deckschichten deutlich verbessert wird und die Systeme bei gewöhnlichen Doppelbandtemperaturen von weniger als 60 °C verarbeitbar sind.

Der Gegenstand der vorliegenden Erfindung ist somit ein Verfahren zur Herstellung eines Polyesteretherols, wobei zunächst mindestens eine Verbindung ausgewählt aus der Gruppe umfassend aromatische Dicarbonsäuren, deren Anhydride und Mischungen daraus, mit mindestens einer Verbindung aus der Gruppe der mehrwertigen Alkohole unter Ausbildung eines Polyesterols A mit einer Säurezahl kleiner als 5 mg KOH/g umgesetzt wird, und dann der erhaltene Polyesterol A unter Verwendung eines basischen Katalysators mit Propylenoxid oder einem Gemisch aus Propylenoxid und Ethylenoxid zur Reaktion gebracht wird, und wobei der basische Katalysator eine Aminverbindung ist.

Des weiteren beschrieben sind auch ein Polyesteretherol, herstellbar nach dem erfindungsgemäßen Verfahren, sowie die Verwendung eines nach dem erfindungsgemäßen Verfahren herstellbaren Polyesteretherols zur Herstellung eines Polyurethans.

Des weiteren beschrieben ist auch ein harter Polyurethanschaumstoff, der erhältlich ist durch Vermischen von Verbindungen mit Isocyanaten gegenüber reaktiven Gruppen mit Isocyanaten und weiteren Komponenten (Treibmittel, Flammschutzmittel, Katalysatoren und weiteren Additiven), wobei die Verbindungen mit Isocyanaten gegenüber reaktiven Gruppen mindestens 5 Gew% eines nach dem erfindungsgemäßen Verfahren herstellbaren Polyesteretherols beinhalten, bezogen auf das Gesamtgewicht der Verbindungen mit gegenüber Isocyanaten reaktiven Gruppen.

Im Rahmen der vorliegenden Erfindung ist der Begriff "Polyesterol" gleichbedeutend mit dem Ausdruck "Polyesteralkohol", und bezeichnet einen Polyester mit durchschnittlich mindestens 1,5 freien Alkoholgruppen und einer Säurezahl niedriger 5, bevorzugt niedriger 2, besonders bevorzugt niedriger 1 mg KOH/g Polyesterol.

Die Propoxylierung des Polyesteretherol-Zwischenprodukts wird erfindungsgemäß unter Verwendung von basischen Katalysatoren durchgeführt, bei denen es sich um aminische Katalysatoren handelt. Besonders bevorzugt sind Katalysatoren ausgewählt aus der Gruppe enthaltend DMEOA (Dimethylethanolamin), Imidazol und Imidazolderivate, insbesondere Imidazol und Imidazolderviate, wobei auch Mischungen der vorgenannten Katalysatoren zur Herstellung der propoxylierten Ester verwendet werden können. Ganz besonders bevorzugt wird Imidazol verwendet.

Beim erfindungsgemäßen Verfahren wird zunächst die Esterstruktur gebildet; anschließend wird dieser Ester propoxyliert, wobei das Molverhältnis PO zu OH-Funktion des Esters kleiner 100, bevorzugt kleiner 20, kleiner 5, kleiner 2 und speziell kleiner 1,5 ist.

Der Esterstarter wird durch Kondensation von mehrfunktionellen Carbonsäuren und mehrfunktionellen Alkoholen hergestellt.

Die für den Esterstarter verwendeten mehrfunktionellen Carbonsäuren werden ausgewählt aus der Gruppe der aromatischen Dicarbonsäuren, deren Anhydriden und Mischungen daraus. Bevorzugt sind aromatische Dicarbonsäuren ausgewählt aus der Gruppe umfassend PSA (Phthal-säureanyhdrid), DMT (Dimethylterephthalat), PET (Polyethylenterephthalat) und TPA (Terephthalsäure) sowie Mischungen daraus, speziell TPA-basierte Säuren (DMT, PET, TPA), am bevorzugtesten TPA.

Die für den Esterstarter verwendeten mehrfunktionellen Alkohole sind zumeist Dialkohole mit 2 bis 12 Kohlenstoffatomen, wie beispielsweise Ethylenglykol, Diethylenglykol (DEG), Propylenglykol, Dipropylenglykol, 1,4-Butandiol und seine Isomere, 1,5-Pentandiol und seine Isomere, bevorzugt Diethylenglykol.

Für die Herstellung der Esterstarter können zusätzlich auch weitere Ausgangsstoffe, unter anderem Fettsäuren und Fettsäure-enthaltende Verbindungen, eingesetzt werden. Verwendet werden können beispielsweise Monocarbonsäuren wie z.B. Ölsäure, Öle wie z.B. Sojaöl oder Rizinusöl.

Auch Alkohole mit mehr als zwei OH-Gruppen, wie z.B. Glycerin, Trimethylolpropan oder Pentaerythrit und deren Alkoxylate, bevorzugt Ethoxylate, können verwendet werden. Besonders bevorzugt sind jedoch unmodifizierte höherfunktionelle Komponenten wie z.B. Glycerin, Trimethylolpropan oder Pentaerythrit, im speziellen Glycerin. Die nicht zweifunktionellen Ausgangsstoffe können einen Gehalt von bis zu 60 Gew.%, bezogen auf die Gesamtmasse des Esterstarters, ausmachen.

Der Esterstarter besitzt eine durchschnittliche OH-Funktionalität von 1,5 bis 5, bevorzugt 1,75 bis 3, eine OH-Zahl im Bereich von 50 bis 400, bevorzugt 100 bis 300 mg KOH/g Esterstarter, sowie eine Säurezahl unter 5, bevorzugt unter 2, besonders bevorzugt unter 1 mg KOH/g.

In einer Ausführungsform des erfindungsgemäßen Verfahrens wird die Umsetzung des Polyesterols A mit Propylenoxid oder einem Gemisch aus Propylenoxid und Ethylenoxid bei einer Temperatur im Bereich von 90° bis 160 °C, bevorzugt 90° bis 130° C durchgeführt.

Zur Alkoxylierung des Polyesterols A wird erfindungsgemäß Propylenoxid oder ein Gemisch aus Propylenoxid mit Ethylenoxid verwendet.

In einer Ausführungsform des erfindungsgemäßen Verfahrens wird Propylenoxid im Gemisch mit Ethylenoxid verwendet; in einer bevorzugten Ausführungsform wird nur Propylenoxid verwendet.

Das erfindungsgemäße Verfahren wird in der Regel bei einem Druck zwischen 0,1 bis 8 bar durchgeführt. An die Dosierung der Alkylenoxide schließt sich üblicherweise eine Nachreaktionsphase zur möglichst vollständigen Umsetzung der Alkylenoxide an. Der so erhaltene Rohpolyesteretheralkohol wird durch Destillation, vorzugsweise unter Vakuum, von nicht umgesetztem Alkylenoxid und leicht flüchtigen Verbindungen befreit.

Die Anlagerung der Alkylenoxide an den Polyesterol A zur Herstellung des erwünschten Polyesteretherols kann im Semibatch-Verfahren oder auch vollständig kontinuierlich oder semikontinuierlich verlaufen. Bevorzugt wird im Semibatch-Verfahren gearbeitet.

In einer weiteren Ausführungsform wird zusätzlich zur Startermischung ein bestimmter Anteil an Produkt oder Vorprodukt mit in den Reaktor vorgelegt (Heel-Fahrweise).

Nach Beendigung der Anlagerung der Alkylenoxide werden die Polyole in der Regel nach üblichen Verfahren aufgearbeitet, indem die nicht umgesetzten Alkylenoxide sowie leicht flüchtige Bestandteile entfernt werden, üblicherweise durch Destillation, Wasserdampf- oder Gasstrippen und/oder anderen Methoden der Desodorierung. Falls erforderlich, kann auch eine Filtration erfolgen.

Die Produkte des erfindungsgemäßen Verfahrens, d. h. die erfindungsgemäß herstellbaren Polyetherester-Polyole, weisen in der Regel eine OH-Zahl im Bereich von 100 bis 350, bevorzugt 170 bis 250 mg KOH/ g auf.

Die erfindungsgemäß herstellbaren Polyetheresterpolyole können u.a. zur Herstellung von Polyurethanen verwendet werden, insbesondere zur Herstellung von Polyurethanhartschaumstoffen, wie z.B. kontinuierlich oder diskontinuierlich produzierte Dämmplatten, Sandwichelementen mit metallischen Deckschichten, freigeschäumten Blockschäumen, Rohrdämmungen u. a.

Die Herstellung der Polyurethane, dieser Begriff soll im Folgenden Polyurethane und polyisocyanuratmodifizierte Polyurethane umfassen, erfolgt dabei durch Umsetzung der erfindungsgemäß herstellbaren Polyetheresterpolyole mit Polyisocyanaten. Die Umsetzung erfolgt üblicherweise in Anwesenheit von Treibmitteln, Katalysatoren und üblichen Hilfs- und/oder Zusatzstoffen. Zu den verwendeten Einsatzstoffen ist im Einzelnen folgendes zu sagen.

Als Polyisocyanate kommen alle Isocyanate mit zwei oder mehreren Isocyanatgruppen im Molekül zum Einsatz. Dabei können aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI) verwendet werden. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate.

Vorzugsweise werden als Polyisocyanate a) TDI oder MDI, seine höheren Homologen und/oder dessen Umsetzungsprodukte mit Verbindungen mit mindestens zwei mit Isocyanatgruppen reaktiven Wasserstoffatomen eingesetzt.

Für die Herstellung von Blockweichschaumstoffen wird insbesondere TDI eingesetzt, während bei der bevorzugten Herstellung von Formweichschäumen sowie Hartschäumen vorzugsweise MDI und seine höheren Homologen eingesetzt werden.

Als Treibmittel werden zumeist Wasser, Carbonsäuren wie Ameisensäure, die bei der Reaktion mit Isocyanaten gasförmige Verbindungen bilden, (sogenannte chemische Treibmittel), sowie bei der Reaktionstemperatur der Urethanreaktion gasförmige, gegenüber den Ausgangsstoffen der Polyurethane inerte Verbindungen, und/oder sogenannte physikalisch wirkende Treibmittel, sowie Gemische daraus eingesetzt. Als physikalisch wirkende Treibmittel werden zumeist Kohlenwasserstoffe mit 2 bis 6 Kohlenstoffatomen, halogenierte Kohlenwasserstoffe mit 2 bis 6 Kohlenstoffatomen, Ketone, Acetale, Ether, Inertgase wie Kohlendioxid oder Edelgase eingesetzt.

Als Katalysatoren werden im erfindungsgemäßen Verfahren zur Herstellung von Polyurethanen vorzugsweise Aminverbindungen und/oder Metallverbindungen, insbesondere Schwermetallsalze und/oder metallorganische Verbindungen, eingesetzt. Insbesondere werden als Katalysatoren bekannte tertiäre Amine und/oder organische Metallverbindungen und/oder Carboxylatsalze meist von Alkalimetallen oder Ammoniumionen verwendet. Als organische Metallverbindungen kommen z.B. Zinnverbindungen in Frage, wie beispielsweise Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Als für diesen Zweck übliche organische Amine seien beispielhaft genannt: Triethylendiamin, Bis(N,N-dimethylaminoethyl)ether, N,N-dimethylethanolamine, Dimethyl-2-hydroxy(propyl)1,3-propylendiamin, N,N-dimethylhexadecylamin, Pentamethyldipropylentriamin, Triethylamin, 1,4-Diazabicyclo-[2.2.2]-oktan, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin. Die beschriebenen Katalysatoren können einzeln oder in Form von Mischungen eingesetzt werden.

Es können im erfindungsgemäßen Verfahren zur Herstellung von Polyurethanen auch weitere Hilfsmittel und/oder Zusatzstoffe zugegeben werden, wie beispielsweise Trennmittel, Flammschutzmittel, Farbstoffe, Füllstoffe und/oder Verstärkungsmittel. Auch können die Polyesterether in Abmischungen mit weiteren Polyethern oder Polyestern mit Isocyanaten zur Reaktion gebracht werden.

Die Polyolseite, bestehend aus dem propoxylierten Polyester, eventuell Polyether, eventuell unpropoxylierter Ester, Stabilisator, eventuell einem oder mehreren Flammschutzmitteln sowie eventuell weitere Additive, beinhaltet zu mindestens 5 Gew.% den erfindungsgemäß herstellbaren propoxylierten Ester (bevorzugt mehr als 10 Gewichts-%), und falls kein unpropoxylierter Ester in dem System verwendet wird, bevorzugt mehr als 10%, besonders bevorzugt mehr als 20 % und im speziellen mehr als 30 %, bezogen auf die gesamte Polyolseite.

Bei der Herstellung eines Polyurethans (PUR) wird das System in der Regel mit einem Isocyanatindex > 100 verschäumt, im speziellen > 110 und bevorzugt > 120, in besonderen Fällen bevorzugt > 160. Bei der Herstellung eines Polyisocyanurat-enthaltenen Polyurethans (PIR) wird das System in der Regel mit einem Isocyanatindex > 180, im speziellen > 250 und bevorzugt > 300 verschäumt.

Die Systeme können kontinuierlich, diskontinuierlich oder im Spray-Verfahren angewendet werden. Bevorzugt werden die Systeme diskontinuierlich und kontinuierlich, besonders bevorzugt kontinuierlich verwendet.

### Beispiele

Die folgenden Beispiele dienen der Veranschaulichung der vorliegenden Erfindung; sie sollen keinesfalls einschränkend für den Umfang der Erfindung ausgelegt werden.

### Synthesebeispiel A

470,8 kg eines Polyesterols mit einer Hydroxyzahl von 244,4 mg KOH/g bestimmt nach DIN 53240, einer Säurezahl von 0,28 mg KOH/g bestimmt nach DIN EN 14104 und einer Funktionalität von 2,3 wurden in einen 600 L Stahlautoklav zusammen mit 165 g Imidazol vorgelegt, auf 120 °C erwärmt und für 30 Minuten bei 15 mbar getrocknet. Anschließend wurden 129 kg Propylenoxid innerhalb von 120 Minuten zur Reaktionsmischung zudosiert. Nach beendeter Dosierung folgte eine fünfstündige Nachreaktion. Das Produkt wurde schließlich durch Vakuumdestillation von leichtflüchtigen Bestandteilen befreit. Es wurden 590 kg des Polyetheresters erhalten.

| | |
|---|---|
| Hydroxyzahl (nach DIN 53240): | 204 mg KOH/g |
| Säurezahl (nach DIN EN 14104): | 0,17 mg KOH/g |
| Wasserwert (nach DIN 51777): | 0,006 % |
| Viskosität, 25°C (nach DIN 53 018): | 6479 mPas |

### Synthesebeispiel B

452 kg eines Polyesterols mit einer Hydroxyzahl von 244,4 mg KOH/g bestimmt nach DIN 53240, einer Säurezahl von 0,28 mg KOH/g bestimmt nach DIN EN 14104 und einer Funktionalität von 2,3 wurden in einen 600 L Stahlautoklav zusammen mit 600 g Imidazol vorgelegt, auf 120 °C erwärmt und für 30 Minuten bei 15 mbar getrocknet. Anschließend wurden 148 kg Propylenoxid innerhalb von 90 Minuten zur Reaktionsmischung zudosiert. Nach beendeter Dosierung folgte eine achtstündige Nachreaktion. Das Produkt wurde schließlich durch Vakuumdestillation von leichtflüchtigen Bestandteilen befreit. Es wurden 590 kg des Polyetheresters erhalten.

| | |
|---|---|
| Hydroxyzahl (nach DIN 53240): | 195 mg KOH/ g |
| Säurezahl (nach DIN EN 14104): | 0,15 mg KOH/ g |
| Wasserwert (nach DIN 51777): | 0,006 % |
| Viskosität (bei 25°C nach DIN 53 018): | 5034 mPas |

### Synthesebeispiel C

1511 kg eines Polyesterols basierend auf Phthalsäureanhydrid und Diethylenglykol mit einer OH-Zahl von 315 mg KOH/g und einer Viskosität von 3000 mPa*s bei 25°C (Lupraphen® H978) wurden in einen 5 L Stahlautoklav zusammen mit 2,5 g Imidazol vorgelegt, auf 110 °C erwärmt und für 30 Minuten bei 15 mbar getrocknet. Anschließend wurden 989 g Propylenoxid innerhalb von 180 Minuten zur Reaktionsmischung zudosiert. Nach beendeter Dosierung folgte eine vierzehnstündige Nachreaktion. Das Produkt wurde schließlich durch Vakuumdestillation von leichtflüchtigen Bestandteilen befreit. Es wurden 2400 g des Polyetheresters erhalten.

| | |
|---|---|
| Hydroxyzahl (nach DIN 53240): | 217,5 mg KOH/g |
| Viskosität (bei 25°C nach DIN 53 018): | 1202 mPas |

### Synthesebeispiel D

1748 g eines Polyesterols basierend auf Phthalsäureanhydrid, Ölsäure, Trimethylolpropan und Diethylenglykol mit einer OH-Zahl von 240 mg KOH/g und einer Viskosität von 8500 mPa*s bei 25°C (Lupraphen® VP9330) wurden in einen 5 L Stahlautoklav zusammen mit 2,5 g Imidazol vorgelegt, auf 110 °C erwärmt und für 30 Minuten bei 15 mbar getrocknet. Anschließend wurden 789 g Propylenoxid innerhalb von 60 Minuten zur Reaktionsmischung zudosiert. Nach beendeter Dosierung folgte eine zwanzigstündige Nachreaktion. Das Produkt wurde schließlich durch Vakuumdestillation von leichtflüchtigen Bestandteilen befreit. Es wurden 2300 g des Polyetheresters erhalten.

| | |
|---|---|
| Hydroxyzahl (nach DIN 53240 ): | 168 mg KOH/g |
| Viskosität (bei 25°C nach DIN 53 018): | 2171 mPas |

### Gegenbeispiel A

156,9 g eines Polyesterols mit einer OH-Zahl von 230 mg KOH/g und einer Säurezahl von 7,3 mg KOH/g wurden in einen 300 mL Stahlautoklav zusammen mit 0,07 g Imidazol vorgelegt, auf 130 °C erwärmt und für 60 Minuten bei 15 mbar getrocknet. Anschließend wurden 83,1 g Propylenoxid zur Reaktionsmischung zudosiert. Nach dem Start der Propylenoxid-Dosierung, stieg der Druck stetig an bis nach zwei Stunden ein Druckmaximum von 7 bara erreicht wurde. Während des gesamten Versuchsverlaufs wurde keine exotherme Reaktion beobachtet. Der Druck fiel in der Abreaktionsphase innerhalb von 2 Stunden lediglich bis auf 5,5 bara ab. Die Bestimmung der OH-Zahl des Reaktionsproduktes bestätigte die Beobachtung, dass keine vollständige Umsetzung des Propylenoxids stattgefunden hat. Es wurde eine Hydroxyzahl von 194 mg KOH/g bestimmt, die um 44 Einheiten von der theoretisch erwarteten Hydroxyzahl abwich.

Dieses Beispiel verdeutlicht, dass die Alkoxilierung eines Polyesters mit einer Säurezahl von > 5 mg KOH/g nicht zum gewünschten Produkt führt und die Reaktion aufgrund der Deaktivierung des Alkoxilierungskatalysator unvollständig abläuft.

### Vergleichsbeispiel A

1846 g eines Polyesterols basierend auf Phthalsäureanhydrid und Diethylenglykol mit einer OH-Zahl von 315 mg KOH/g und einer Viskosität von 3000 mPa*s bei 25°C (Lupraphen® H978) wurden in einen 5 Stahlautoklav zusammen mit 2,8 g Imidazol vorgelegt, auf 130 °C erwärmt und für 30 Minuten bei 15 mbar getrocknet. Anschließend wurden 904 g Ethylenoxid innerhalb von 180 Minuten zur Reaktionsmischung zudosiert. Nach beendeter Dosierung folgte eine vierstündige Nachreaktion. Das Produkt wurde schließlich durch Vakuumdestillation von leichtflüchtigen Bestandteilen befreit. Es wurden 2700 g des Polyetheresters erhalten.

| | |
|---|---|
| Hydroxyzahl (nach DIN 53240 ): | 235,6 mg KOH/g |
| Viskosität (bei 25°C nach DIN 53 018): | 969,1 mPas |

### Vergleichsbeispiel B

2402 g eines Polyesterols basierend auf Phthalsäureanhydrid, Ölsäure, Trimethylolpropan und Diethylenglykol mit einer OH-Zahl von 240 mg KOH/g und einer Viskosität von 8500 mPa*s bei 25°C (Lupraphen® VP9330) wurden in einen 5 L Stahlautoklav zusammen mit 3,7 g Imidazol vorgelegt, auf 130 °C erwärmt und für 30 Minuten bei 15 mbar getrocknet. Anschließend wurden 789 g Ethylenoxid innerhalb von 300 Minuten zur Reaktionsmischung zudosiert. Nach beendeter Dosierung folgte eine zehnstündige Nachreaktion. Das Produkt wurde schließlich durch Vakuumdestillation von leichtflüchtigen Bestandteilen befreit. Es wurden 3000 g des Polyetheresters erhalten.

| | |
|---|---|
| Hydroxyzahl (nach DIN 53240 ): | 186 mg KOH/g |
| Viskosität (bei 25°C nach DIN 53 018): | 995 mPas |

### Vergleichsbeispiel C

Es werden 4431 g Terephthalsäure, 2002 g Ölsäure, 3397 g Diethylenglykol und 1228 g gemäß einer allgemeinen Arbeitsvorschrift zur Herstellung eines Polyesterols umgesetzt. Es wird ein Polyesterol mit einer OH-Funktionalität von 2,3 und einer Hydroxylzahl von 244,4 mg KOH/g (bestimmt nach DIN 53240) und einer Säurezahl von 0,5 mg KOH/g (bestimmt nach DIN EN ISO 2114) erhalten, das als Vergleichsbeispiel in den unten angeführten anwendungstechnischen Untersuchungen verwendet wurde.

### Beispiele zum Einsatz der erfindungemäßen Polyetherester-Polyole:

### Härtung

Die Härtung wurde mit dem Bolzentest ermittelt. Dazu wird zu verschiedenen Zeitpunkten nach Vermischung der Komponenten in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die dafür erforderliche Maximalkraft in N ist ein Maß für die Härtung des Schaumstoffs.

### Flammfestigkeit

Die Flammhöhe wurde nach EN ISO 11925-2 gemessen.

### Haftung:

Es wurden Probekörper im Doppelbandverfahren hergestellt. Hierzu wurde beim Doppelband ein Abstand zwischen unterem und oberen Band von 170 mm eingestellt und Probekörper mit metallischer Deckschicht hergestellt. Anschließend erfolgte die Bestimmung der Zugfestigkeit gemäß DIN 53292/DIN EN ISO 527-1. Wird in diesem Fall das Blech vom Probekörper abgezogen, entspricht der Messwert der Haftung, erfolgt ein Versagen im Schaum, ist die Haftung größer als der gemessene Wert, welcher der Zugfestigkeit des Schaums entspricht.

### Bestimmung der Elementdicke

### Zur Bestimmung der Elementdicke nach der Verschäumung wird das Doppelband auf einen Abstand von 170 mm eingestellt, Sandwichelemente mit 50 µm dicker Aluminiumfolie als Deckschichtmaterial im Doppelbandverfahren hergestellt und 5 Minuten nach der Herstellung die Elementdicke in der Elementmitte bestimmt.

### Herstellung von Polyurethan-Hartschaumstoffen (Variante 1):

### Herstellung der Polyurethan-Hartschaumstoffe

Das Isocyanat sowie die mit Isocyanat reaktiven Komponenten wurden zusammen mit den Treibmitteln, Katalysatoren und allen weiteren Zusatzstoffen bei einem konstanten Mischungsverhältnis von Polyol zu Isocyanat von 100:190 verschäumt.

### Polyolkomponente:

47,5 Gewichtsteile Polyesterol gemäß Beispielen bzw. Vergleichsbeispielen
15 Gewichtsteile Polyetherol, mit einer OHZ von ∼ 490 mg KOH/g hergestellt durch Polyaddition von Propylenoxid an einer Saccharose/Glycerin-Mischung als Startermolekül
10 Gewichtsteile Polyetherol, bestehend aus dem Ether von Ethylenglykol und Ethylenoxid mit einer Hydroxylfunktionalität von 2 und einer Hydroxylzahl von 200 mg KOH/g
25 Gewichtsteile Flammschutzmittel Trischlorisopropylphosphat (TCPP)
2,5 Gewichtsteile Stabilisator Niax Silicone L 6635 (siliconhaltiger Stabilisator)
6,5 Gewichtsteile Pentan S 80:20
ca. 2,3 Gewichtsteile Wasser
1,5 Gewichtsteile Kaliumacetat-Lösung (47 Gew.-% in Ethylenglykol)
ca 1,1 Gewichtsteile Dimethylcyclohexylamin

### Isocyanatkomponente:

190 Gewichtsteile Lupranat® M50

Die Verschäumung erfolgte zunächst im Labor. Die Rohdichte wurde dabei bei konstantem Pentangehalt von 6,5 Gewichtsteilen durch Variation des Wassergehalts auf 38 +/- 1 g/L eingestellt. Die Abbindezeit wurde ferner auf 50 +/- 1 s durch Variation des Anteils des Dimethylcyclohexylamins eingestellt. Die Ergebnisse sind in Tabelle 1 zusammengefasst, wobei zur Illustration der Wert der Härtung 5 Minuten nach dem Vermischen der Komponenten angegeben ist:

**Tabelle 1 Ergebnisse der Härtung**

| Polyesterpolyol: | Vergleichsbeispiel C | Erfindungsgemäßes Beispiel A |
|---|---|---|
| Bolzentest nach 5 min [N] | 79 | 86 |

Tabelle 1 zeigt, dass die nach dem erfindungsgemäßen Verfahren hergestellten Polyurethan-Hartschaumstoffe schneller aushärten.

Es wurden anschließend 50 mm dicke Sandwichelemente nach dem Doppelbandverfahren bei einer Doppelbandtemperatur von 48 +/- 3 °C hergestellt. Die Rohdichte wurde dabei bei konstantem Pentangehalt von 6,5 Gewichtsteilen durch Variation des Wassergehalts auf 37 +/- 1 g/L eingestellt. Die Abbindezeit wurde ferner auf 25 +/- 1 s durch Variation des Anteils des Dimethylcyclohexylamins eingestellt.

Die Ergebnisse sind in Tabelle 2 zusammengefasst.

**Tabelle 2 Ergebnisse der Versuche zur Herstellung von 50 mm dicken Sandwichelementen nach dem Doppelbandverfahren**

| Polyesterpolyol: | Vergleichsbeispiel C | Erfindungsgemäßes Beispiel A |
|---|---|---|
| Bodenstörungen [%]/ optische Beurteilung | 2,8 / leichte Störungen | 0,8 / perfekt |

Tabelle 2 zeigt, dass die nach dem erfindungsgemäßen Verfahren hergestellten Polyurethan-Hartschaumstoffe qualitativ höherwertig sind.

Ferner wurden mit den Systemen enthaltend das Vergleichsbeispiel 2 und das erfindungsgemäße Beispiel 2 170 mm dicke Sandwichelemente nach dem Doppelbandverfahren bei einer Doppelbandtemperatur von 48 +/- 3 °C hergestellt. Die Rohdichte wurde dabei bei konstantem Pentangehalt von 6,5 Gewichtsteilen durch Variation des Wassergehalts auf 37 +/- 1 g/L eingestellt. Die Abbindezeit wurde ferner auf 40 +/- 1 s durch Variation des Anteils des Dimethylcyclohexylamins eingestellt.

Die Ergebnisse sind in Tabelle 3 zusammengefasst:

**Tabelle 3: Ergebnisse der Versuche zur Herstellung von 170 mm dicken Sandwichelementen nach dem Doppelbandverfahren**

| Polyesterpolyol: | Vergleichsbeispiel C | Erfindungsgemäßes Beispiel A |
|---|---|---|
| Zugfestigkeit gemäß DIN 53292 / DIN EN ISO 527-1 [N] | 0,05 | 0,11 |
| Elementdicke nach Verschäumung | 187 mm | 179 mm |

Tabelle 3 zeigt, dass durch die Verwendung des erfindungsgemäß hergestellten Polyesterols die Maßhaltigkeit des Polyurethansystems deutlich verbessert wird.

### Beispiel

### Herstellung von Polyurethan-Hartschaumstoffen (Variante 2):

Weiterhin wurden Prüfplatten nach dem Doppelbandverfahren gemäß folgender Herstellung eines Polyurethan-Hartschaumstoffes (Variante 2) hergestellt.

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyol zu Isocyanat von 100:170 verschäumt.

### Polyolkomponente:

58 Gewichtsteile Polyesterol gemäß Beispielen bzw. Vergleichsbeispielen
10 Gewichtsteile Polyetherol, bestehend aus dem Ether von Ethylenglykol und Ethylenoxid mit einer Hydroxylfunktionalität von 2 und einer Hydroxylzahl von 200 mg KOH/g
30 Gewichtsteile Flammschutzmittel Trischlorisopropylphosphat (TCPP)
2 Gewichtsteile Stabilisator; Tegostab B 8443 (siliconhaltiger Stabilisator)
10 Gewichtsteile n-Pentan
1,6 Gewichtsteile Ameisensäure-Lösung (85%)
2,0 Gewichtsteile Kaliumformiat-Lösung (36 Gew.-% in Ethylenglycol)
0,6 Gewichtsteile Bis(2-dimethylaminoethyl)ether-Lösung (70 Gew.-% in Dipropylenglykol)

### Isocyanatkomponente:

170 Gewichtsteile Lupranat® M50

Es wurden mit den Systemen 170 mm dicke Sandwichelemente nach dem Doppelbandverfahren bei einer Doppelbandtemperatur von 57 +/- 3 °C hergestellt. Die Rohdichte wurde dabei bei konstantem Ameisensäuregehalt durch Variation des Pentangehalts auf 38 +/- 1 g/L eingestellt. Die Abbindezeit wurde ferner auf 40 +/- 1 s durch Variation des Anteils des Bis(2-dimethylaminoethyl)ether (70 Gew.-% in Dipropylenglykol) eingestellt

Die Ergebnisse sind in Tabelle 4 zusammengefasst:

**Tabelle 4: Ergebnisse der Versuche zur Herstellung von 170 mm dicken Sandwichelementen nach dem Doppelbandverfahren**

| Polyesterpolyol: | Vergleichsbeispiel C | Erfindungsgemäßes Beispiel A |
|---|---|---|
| Elementdicke nach Verschäumung | 187 mm | 179 mm |

Tabelle 4 zeigt, dass durch die Verwendung des erfindungsgemäß hergestellten Polyesterols die Maßhaltigkeit des Polyurethansystems deutlich verbessert wird.

### Herstellung von Polyurethanhartschaumstoffen (Variante 3):

### Polyolkomponente:

36 Gewichtsteile Polyesterol gemäß Beispielen bzw. Vergleichsbeispielen
30 Gewichtsteile Polyetherol basierend auf Saccharose/Glycerin mit einer OHZ von 490 mg KOH/g
15 Gewichtsteile Glykolgemisch aus DPG und MPG (1:1)
14 Gewichtsteile Polypropylenglykol mit einer OH von 104 mg KOH/g
3 Gewichtsteile Glycerin
2 Gewichtsteile siliconhaltiger Stabilisator Tegostab B 8462
1,5 Gewichtsteile Wasser
0,01 Gewichtsteile Dimethylcyclohexylamin

### Isocyanatkomponente:

165 Gewichtsteile Polymeres Methylendiphenyldiisocyanat, NCO-Gehalt ∼ 31.5 gew%, Viskosität ∼ 200 mPa*s (25°C)

### Herstellung:

Das Isocyanat sowie die mit Isocyanat reaktiven Komponenten wurden zusammen mit den Treibmitteln, Katalysatoren und allen weiteren Zusatzstoffen bei einem NCO-Index von 125 vermischt und das Reaktionsgemisch in eine Box mit der Grundfläche 225 mm x 225 mm gegossen und dort verschäumt. Schaumdichte von 100 g/L und Abbindezeit von 360 sec wurden durch Anpassen der Wasser- und Aminmenge konstant gehalten. Zur Herstellung der verstärkten Hartschaumstoffe wurde das Reaktionsgemisch in die gleiche Box gegeben, die nun aber 7 Lagen Glasfasermatten des Typs Unifilo U809-450 der Firma OCV enthielten.

### Bestimmung der Durchlaufzeit:

Die oberste Glasfasermatte wurde an 5 Punkten markiert. Die Durchlaufzeit begann, sobald das Reaktionsgemisch auf die 7 Lagen Glasfasermatten gegossen wurde und endete, sobald mindestens 4 der 5 markierten Punkte wieder sichtbar wurden.

### Bestimmung der Verträglichkeit zwischen Glasfasern und PUR:

Nach Aushärten des Schaumwürfels wurde dieser senkrecht zu den Glasfasermatten zerteilt und die Abstände der benachbarten Glasfasermatten zueinander bestimmt. Daraus wurden der mittlere Mattenabstand sowie die dazugehörige Standardabweichung berechnet.

**Tabelle 5:**

| | Vergleichsbeispiel 4 | Vergleichsbeispiel 5 | Erfind. Beispiel 4 |
|---|---|---|---|
| Polyesterol | Esterstarter* | Esterstarter: Vergleichsbeispiel A = 1:1 | Esterstarter: Synthesebeispiel C = 1:1 |
| Viskosität der A-Komponente (mPa*s, bei 25°C) | 1400 | 1230 | 1250 |
| Durchlaufzeit, sec | 99 | 96 | 85 |
| Schaumqualität | gut | gut | gut |
| Std-Abweichung Mattenabstand (cm) | 0,41 | 0,31 | 0,32 |
| Druckfestigkeit / Druck-E-Modul (N/mm²) | 0,93/24 | n.b. | 0,90/24 |
| Zugfestigkeit / Zug-E-Modul (N/mm²) | 1,0/34 | n.b. | 1,0/33 |

| | | | |
|---|---|---|---|
| *: Esterstarter: Polyesterol basierend auf Phthalsäureanhydrid und DEG, OHZ 315 mg KOH/g, Viskosität 3000 mPa*s (25°C) | | | |

Tabelle 5 zeigt, dass bei der Alkoxylierung die A-Komponenten dünnflüssiger werden und die Mattenverteilung im Schaum homogener wird. Nur die Propoxylierung führt zu den beschleunigten Durchlaufzeiten. Mechanische Eigenschaften werden dabei nicht beeinträchtigt. Mit propoxylierten Estern kann somit bei leicht besserer Produktqualität die Produktion deutlich beschleunigt werden.

### Herstellung eines Polyurethanhartschaumstoffes (Variante 4):

### Polyolkomponente:

23 Gewichtsteile Polyesterol 1 basierend auf Terephthalsäure, Ölsäure, TMP und DEG, OHZ 245 mg KOH/g
23,5 Gewichtsteile Polyesterol 2 gemäß Beispielen bzw. Vergleichsbeispielen
25 Gewichtsteile Polyetherol basierend auf Sorbitol mit einer OHZ von 490 mg KOH/g
6 Gewichtsteile Polyethylenglykol mit einer OH von 200 mg KOH/g
20 Gewichtsteile TCPP
2,5 Gewichtsteile siliconhaltiger Stabilisator Niax Silicone L-6635
1,4 Gewichtsteile Wasser
7 Gewichtsteile n-Pentan
1,5 Gewichtsteile Kaliumacetat-Lösung (47 gew% in Ethylenglykol)
0,7 Gewichtsteile Aminkatalysator (Gemisch tertiärer Amine)

### Isocyanatkomponente:

Ca. 165 Gewichtsteile Polymeres Methylendiphenyldüsocyanat, NCO-Gehalt ~ 31.5 Gew%, Viskosität ∼ 500 mPa*s (25°C)

### Herstellung:

Das Isocyanat sowie die mit Isocyanat reaktiven Komponenten wurden zusammen mit den Treibmitteln, Katalysatoren und allen weiteren Zusatzstoffen bei einem NCO-Index von 190 vermischt und das Reaktionsgemisch in eine Box mit der Grundfläche 225 mm x 225 mm gegossen und dort verschäumt. Schaumdichte von 45 g/L und Abbindezeit von 45 sec wurden durch Anpassen der Wasser- und Aminmenge konstant gehalten.

**Tabelle 6:**

| | Vergleichsbeispiel 6 | Vergleichsbeispiel 7 | Erfind. Beispiel 5 |
|---|---|---|---|
| Polyesterol 2 | Esterstarter* | Gegenbeispiel B | Synthesebeispiel D |
| Viskosität der A-Komponente (mPa*s, bei 25°C) | 2500 | 1500 | 1800 |
| Bolzentest nach 5 min (N) | 111 | 116 | 116 |
| 3-Punkt-Biegefestigkeit (N/mm²) | 0,36 | n. bek. | 0,37 |
| Durchbiegung bei Bruch (mm) | 5,9 | n. bek. | 7,1 |

| | | | |
|---|---|---|---|
| *: Esterstarter: Polyesterol basierend auf Phthalsäureanhydrid, Ölsäure, TMP und DEG; OHZ 240 mg KOH/g, Viskosität 8500 mPa*s (25°C) | | | |

Keine Verschlechterung der Aushärtung, aber der Schaum ist weniger spröde und bricht erst bei deutlich stärkerer Durchbiegung.

### Herstellung von Polyurethanhartschaumstoff (Variante 5):

### Polyolkomponente:

22,5 Gewichtsteile Polyesterol 1 basierend auf Terephthalsäure, Ölsäure, TMP und DEG, OHZ 245 mg KOH/g
22,5 Gewichtsteile Polyesterol 2 gemäß Beispielen bzw. Vergleichsbeispielen
12 Gewichtsteile Polyethylenglykol mit einer OH von 190 mg KOH/g
40 Gewichtsteile Mischung aliphatischer Phosphorsäureester
3 Gewichtsteile siliconhaltiger Stabilisator Tegostab B 8467
3,5 Gewichtsteile Ameisensäure-Lösung (85 Gewichts-% in Wasser)
13 Gewichtsteile n-Pentan
2 Gewichtsteile Kaliumformiat-Lösung (36 Gew% in Ethylenglykol)
2,2 Gewichtsteile Aminkatalysator (Gemisch tertiärer Amine)

### Isocyanatkomponente:

Ca. 320 Gewichtsteile Polymeres Methylendiphenyldiisocyanat, NCO-Gehalt ∼ 31.5 Gew%, Viskosität ∼ 500 mPa*s (25°C)

### Herstellung:

Das Isocyanat sowie die mit Isocyanat reaktiven Komponenten wurden zusammen mit den Treibmitteln, Katalysatoren und allen weiteren Zusatzstoffen bei einem NCO-Index von 500 vermischt und das Reaktionsgemisch in eine Box mit der Grundfläche 225 mm x 225 mm gegossen und dort verschäumt. Schaumdichte von 40 g/L und Abbindezeit von 50 sec wurden durch Anpassen der Ameisensäure- und Aminmenge konstant gehalten.

**Tabelle 7:**

| | Vergleichsbeispiel 8 | Vergleichsbeispiel 9 | Erfind. Beispiel 6 |
|---|---|---|---|
| Polyesterol 2 | Starterpolyester* | Gegenbeispiel B | Synthesebeispiel D |
| Viskosität der A-Komponente (mPa*s, bei 25°C) | 700 | 350 | 450 |
| Bolzentest nach 4 min (N) | 90 | 91 | 86 |
| BKZV (cm) | 6,7 | 6,7 | 6,8 |
| 3-Punkt-Biegefestigkeit (N/mm²) | 0,21 | 0,19 | 0,24 |
| 3-Punkt-Biegemodul (N/mm²) | 2,6 | 2,6 | 3,1 |
| Durchbiegung bei Bruch (mm) | 5,0 | 5,5 | 6,2 |

| | | | |
|---|---|---|---|
| *: Starterpolyester: Polyesterol basierend auf Phthalsäureanhydrid, Ölsäure, TMP und DEG; OHZ 240 mg KOH/g, Viskosität 8500 mPa*s (25°C) | | | |

Bei hohem NCO-Index bleibt die Flammhöhe gleich. Auch die Aushärtung bleibt gleich gut. Nur mit dem propoxylierten Polyester wird der Schaum weniger spröde, wie an den 3-Punktbiegedaten zu erkennen ist: Festigkeit, Modul und maximale Durchbiegung nehmen zu.

Zusammenfassend zeigen die Beispiele somit, dass durch die Propoxylierung von Polyestern die Sprödigkeit verringert und die Haftung verbessert werden kann, überraschenderweise ohne andere Eigenschaften, insbesondere Flammwidrigkeit, zu verschlechtern. Dieser positive Effekt tritt nur bei der Propoxylierung auf. Eine analoge Ethoxylierung führt zu deutlich kleineren oder teilweise negativen Effekten im Schaum.

Des Weiteren zeigen die Beispiele, dass die Aushärtung des Schaums verbessert werden kann, was zu dimensionsstabileren Elementen führt.

Zudem wird die Kompatibilität des Polyurethans mit Glasfasermatten, in Form einer beschleunigten Durchlaufzeit eines Reaktionsgemisches durch Glasfasermattenlagen, verbessert.

## Patentansprüche

1. Verfahren zur Herstellung eines Polyesteretherols, wobei zunächst mindestens eine Verbindung ausgewählt aus der Gruppe umfassend aromatische Dicarbonsäuren, deren Anhydride und Mischungen daraus, mit mindestens einer Verbindung aus der Gruppe der mehrwertigen Alkohole unter Ausbildung eines Polyesterols A mit einer Säurezahl kleiner als 5 mg KOH/g umgesetzt wird, und dann der erhaltene Polyesterol A unter Verwendung eines basischen Katalysators mit Propylenoxid oder einem Gemisch aus Propylenoxid und Ethylenoxid zur Reaktion gebracht wird, und wobei der basische Katalysator eine Aminverbindung ist.

2. Verfahren zur Herstellung eines Polyesteretherols nach Anspruch 1, wobei nur Propylenoxid verwendet wird.

3. Verfahren zur Herstellung eines Polyesteretherols nach Anspruch 1, wobei ein Gemisch aus Propylenoxid und Ethylenoxid verwendet wird.

4. Verfahren zur Herstellung eines Polyesteretherols nach Anspruch 1, wobei die Umsetzung des Polyesterols A mit Propylenoxid oder einem Gemisch aus Propylenoxid und Ethylenoxid bei einer Temperatur im Bereich von 90° bis 160 °C durchgeführt wird.

5. Verfahren zur Herstellung eines Polyesteretherols nach einem der Ansprüche 1 bis 4, wobei der basische Katalysator ausgewählt ist aus der Gruppe umfassend DMEOA (Dimethylethanolamin), Imidazol und Imidazolderivate, sowie Mischungen aus den vorgenannten.

6. Verfahren zur Herstellung eines Polyesteretherols nach Anspruch 5, wobei der Katalysator Imidazol ist.

7. Verfahren zur Herstellung eines Polyesteretherols nach einem der Ansprüche 1 bis 6, wobei das Molverhältnis von Propylenoxid zu der Zahl der OH-Funktionen des Polyesterols kleiner 100 ist.

8. Verfahren zur Herstellung eines Polyesteretherols nach einem der Ansprüche 1 bis 7, wobei zur Herstellung des Polyesterols A mindestens eine Verbindung ausgewählt aus der Gruppe enthaltend PSA (Phthalsäureanhydrid) und TPA (Terephthalsäure) eingesetzt wird.

9. Verfahren zur Herstellung eines Polyesteretherols nach einem der Ansprüche 1 bis 8, wobei zur Herstellung des Polyesterols A Glycerin und/oder DEG (Diethylenglycol) als mehrwertiger Alkohol eingesetzt wird.

10. Verfahren zur Herstellung eines Polyesteretherols nach einem der Ansprüche 1 bis 9, wobei zur Herstellung des Polyesterols A zusätzlich eine Fettsäure oder eine Fettsäure-enthaltende Verbindung eingesetzt wird.

## Claims

1. A process for producing a polyesteretherol, where at least one compound selected from the group consisting of aromatic dicarboxylic acids, anhydrides of these, and mixtures thereof is first reacted with at least one compound from the group of the polyhydric alcohols to form a polyesterol A with an acid number smaller than 5 mg KOH/g, and then, with use of a basic catalyst, the resultant polyesterol A is reacted with propylene oxide or with a mixture made with propylene oxide and ethylene oxide, and where the basic catalyst is an amine compound.

2. The process for producing a polyesteretherol according to claim 1, where only propylene oxide is used.

3. The process for producing a polyesteretherol according to claim 1, where a mixture made of propylene oxide and ethylene oxide is used.

4. The process for producing a polyesteretherol according to claim 1, where the reaction of the polyesterol A with propylene oxide or with a mixture made of propylene oxide and ethylene oxide is carried out at a temperature in the range from 90°C to 160°C.

5. The process for producing a polyesteretherol according to any of claims 1 to 4, where the basic catalyst has been selected from the group consisting of DMEOA (dimethylethanolamine), imidazole and imidazole derivatives, and mixtures made of the abovementioned.

6. The process for producing a polyesteretherol according to claim 5, where the catalyst is imidazole.

7. The process for producing a polyesteretherol according to any of claims 1 to 6, where the molar ratio of propylene oxide to the number of OH functions of the polyesterol is smaller than 100.

8. The process for producing a polyesteretherol according to any of claims 1 to 7, where, to produce the polyesterol A, at least one compound selected from the group consisting of PA (phthalic anhydride) and TPA (terephthalic acid) is used.

9. The process for producing a polyesteretherol according to any of claims 1 to 8, where, to produce the polyesterol A, glycerol and/or DEG (diethylene glycol) is used as polyhydric alcohol.

10. The process for producing a polyesteretherol according to any of claims 1 to 9, where, to produce the polyesterol A, a fatty acid or a compound comprising fatty acid is also used.

## Revendications

1. Procédé pour la préparation d'un polyesterétherol, dans lesquels on transforme d'abord au moins un composé choisi dans le groupe comprenant les acides dicarboxyliques aromatiques, leurs anhydrides et des mélanges de ceux-ci avec au moins un composé du groupe des alcools polyvalents avec formation d'un polyesterol A présentant un indice d'acide inférieur à 5 mg de KOH/g puis on fait réagir le polyesterol A obtenu, en utilisant un catalyseur basique, avec de l'oxyde de propylène ou un mélange d'oxyde de propylène et d'oxyde d'éthylène et le catalyseur basique étant un composé d'amine.

2. Procédé pour la préparation d'un polyesterétherol selon la revendication 1, dans lequel on n'utilise que de l'oxyde de propylène.

3. Procédé pour la préparation d'un polyesterétherol selon la revendication 1, dans lequel on utilise un mélange d'oxyde de propylène et d'oxyde d'éthylène.

4. Procédé de préparation d'un polyesterétherol selon la revendication 1, la transformation du polyesterol A avec l'oxyde de propylène ou un mélange d'oxyde de propylène et d'oxyde d'éthylène étant réalisée à une température dans la plage de 90°C à 160°C.

5. Procédé pour la préparation d'un polyesterétherol selon l'une quelconque des revendications 1 à 4, le catalyseur basique étend choisi dans le groupe comprenant la DMEOA (diméthyléthanolamine), l'imidazole et les dérivés d'imidazole ainsi que les mélanges des composés susmentionnés.

6. Procédé pour la préparation d'un polyesterétherol selon la revendication 5, le catalyseur étant l'imidazole.

7. Procédé pour la préparation d'un polyesterétherol selon l'une quelconque des revendications 1 à 6, le rapport molaire d'oxyde de propylène au nombre de fonctions OH du polyesterol étant inférieur à 100.

8. Procédé pour la préparation d'un polyesterétherol selon l'une quelconque des revendications 1 à 7, en utilisant pour la préparation du polyesterol A au moins un composé choisi dans le groupe contenant du PSA (anhydride de l'acide phtalique) et du TPA (acide téréphtalique).

9. Procédé pour la préparation d'un polyesterétherol selon l'une quelconque des revendications 1 à 8, en utilisant pour la préparation du polyesterol A du glycérol et/ou du DEG (diéthylèneglycol) comme alcool polyvalent.

10. Procédé pour la préparation d'un polyesterétherol selon l'une quelconque des revendications 1 à 9, en utilisant pour la préparation du polyesterol A en outre un acide gras ou un composé contenant un acide gras.
